(19) Europäisches Patentamt
European Patent Office
Office européen des brevets

(11) **EP 2 055 402 B1**

(12) **EUROPEAN PATENT SPECIFICATION**

(45) Date of publication and mention
of the grant of the patent:
**12.05.2010 Bulletin 2010/19**

(51) Int Cl.:
***B21C 47/34*** *(2006.01)*  ***B21D 43/09*** *(2006.01)*
***B65H 20/04*** *(2006.01)*

(21) Application number: **08253530.3**

(22) Date of filing: **29.10.2008**

(54) **Sheet material feeding apparatus**

Bandmaterialzuführvorrichtung

Appareil d'alimentation de matériaux en feuilles

(84) Designated Contracting States:
**DE FR GB IT**

(30) Priority: **31.10.2007 JP 2007283367**

(43) Date of publication of application:
**06.05.2009 Bulletin 2009/19**

(73) Proprietor: **Sankyo Seisakusho Co.
Tokyo (JP)**

(72) Inventor: **Kato, Heizaburo
Shizuoka (JP)**

(74) Representative: **Jackson, Martin Peter
J.A. Kemp & Co.
14 South Square
Gray's Inn
London WC1R 5JJ (GB)**

(56) References cited:
**DE-A1- 3 143 177        JP-A- 5 228 560
US-A- 4 638 990        US-A- 5 720 421
US-A1- 2003 200 877**

## Description

Background of the Invention

The present invention relates to a sheet material feeding apparatus according to the preamble of claim 1 (see e.g. JP-A-05 228 560) that intermittently feeds a sheet material a predetermined quantity by a predetermined quantity to a press apparatus, and more particularly to a sheet material feeding apparatus suited to feeding of a sheet material, which is used for manufacturing small-sized parts used in information associated equipment such as personal computers, etc., to a press apparatus at high speed with high accuracy.

Conventionally, there are known sheet material feeding apparatuses comprising a pair of upper and lower rolls that interpose therebetween and feed intermittently a sheet material to a press apparatus, a roll clearance adjusting device that adjusts a clearance between the both rolls according to the thickness of a sheet material, and a release device that temporarily releases a sheet material, having been interposed by the both rolls, just before a sheet material fed to the press apparatus is subjected to press working, the pair of rolls comprising a main roll driven by a drive motor and a sub-roll driven through a sheet material by the main roll (see, for example, United States Patent No. 5,720,421).

Also, there is known a sheet material feeding apparatus (see, for example, United States Patent No. 5,720,421), in which a servomotor is used as a drive motor for driving of a main roll, and a sheet material feeding apparatus (see, for example, JP-U-3-57414), in which a drive motor having an annular stator and an annular rotor is constituted as a main roll.

The release device performs the function of temporarily releasing a sheet material in synchronism with the operation of a press apparatus, that is, the sheet-material releasing function. That is, there are some metal mold devices for press apparatuses, in which a pilot pin directed downward is protrusively provided on an upper metal mold and just before the upper metal mold and a lower metal mold are caused to butt against each other to permit press working, the pilot pin is inserted into a positioning hole beforehand formed on a sheet material to enable positioning the sheet material relative to the metal mold device with high accuracy. In order to position the sheet material with the use of the pilot pin, it is required that a sheet material feeding apparatus releases the sheet material from the pair of rolls at the time of positioning. The release device is provided to produce such function.

The United States Patent No. 5,720,421 describes a construction of the release device, which comprises a wedge member having an inclined surface inclined at a predetermined angle and a follower connected to a sub-roll to engage with the inclined surface of the wedge member and in which the wedge member is moved axially of the sub-roll by a drive device to displace the sub-roll up and down through the follower, thereby generating the sheet-material releasing function.

The construction having the wedge member and the follower also generates the function of adjusting a clearance between the both rolls according to the thickness of a sheet material, that is, the roll clearance adjusting function.

In the release device described in the United States Patent No. 5,720,421, the follower engages with the inclined surface, which is inclined at a predetermined angle, and when the wedge member is moved axially of the sub-roll, the follower in engagement with the inclined surface of the wedge member is displaced up and down by a magnitude in proportion to shift of the wedge member and the sub-roll is displaced up and down by a magnitude corresponding to the displacement of the follower. That is, horizontal shift of the wedge member and vertical displacement of the sub-roll are linearly related to each other. Accordingly, it is difficult to perform control so as to smooth actions at the start (that is, when the sub-roll begins a vertical displacement) and at the time of stoppage (that is, when the sub-roll stops a vertical displacement) and there is a fear that vibrations occur to lead to degradation in accuracy of feeding, in particular, when the sheet material feeding apparatus is operated at high speed.

Also, that construction, in which the wedge member and the follower causes vertical displacement of the sub-roll, is both one that generates the sheet-material releasing function and one that generates the roll clearance adjusting function and by operating the same drive device, the respective functions are generated, but there is a fear that it becomes difficult to appropriately control the drive device so as to generate the both functions appropriately.

For example, in order to enable feeding sheet materials having various thicknesses, let assume that the roll clearance adjusting function is required to generate a vertical displacement of a sub-roll within the range of 1 mm to 5 mm. Even in such case, it suffices that a vertical displacement of a sub-roll required to generate the sheet-material releasing function be in the order of 0.05 mm to 0.1 mm. In this manner, there is usually a large difference between the range of displacement of a sub-roll required to generate the roll clearance adjusting function and the range of displacement of a sub-roll required to generate the sheet-material releasing function. Generally, in the case where a distance of displacement is large, it is required to increase a displacement speed and in the case where a distance of displacement is small, it is required to make a displacement accurate rather than to increase a displacement speed, but it is difficult to appropriately control a single drive device so as to meet different demands in this manner.

Summary of the Invention

It is an object of the invention to provide a sheet material feeding apparatus that dissolves the problem in the related art and can appropriately generate the sheet-material releasing function and the roll clearance adjusting function.

In order to solve such problem, the sheet material feeding apparatus according to the invention has a feature that the roll clearance adjusting device is adapted to displace the main roll up and down to adjust a clearance between the both rolls, and the release device includes a sub-roll guide that rotatably supports the sub-roll and can move up and down together with the sub-roll, a rectilinear cam that is movable axially of the sub-roll, a cam follower mounted to the sub-roll guide to engage with a cam surface of the rectilinear cam, and a control device that is adapted to move the rectilinear cam in synchronism with the operation of the press apparatus to move the sub-roll up and down through the cam follower and the sub-roll guide.

The sheet material feeding apparatus according to the invention generates a sheet-material releasing function by moving the rectilinear cam in synchronism with the operation of the press apparatus to displace the sub-roll up and down through the cam follower and the sub-roll guide. A vertical displacement of the sub-roll corresponding to a vertical displacement of the cam follower is controlled by a shape of a cam surface of the rectilinear cam, with which the cam follower engages. Accordingly, an appropriate design of the shape of the cam surface makes it possible to smooth operations at the start (when the sub-roll begins a vertical displacement) and at the time of stoppage (when the sub-roll stops a vertical displacement).

Also, the roll clearance adjusting device displaces the main roll up and down to generate the roll clearance adjusting function while the release device displaces the sub-roll up and down to generate the sheet-material releasing function. In this manner, since the release device is configured to generate only the sheet-material releasing function irrespective of the roll clearance adjusting function, it becomes very easy to design the shape of the cam surface of the rectilinear cam so as to preferably generate the sheet-material releasing function, or the like. Also, it is possible to appropriately set conditions to design the roll clearance adjusting device irrespective of the sheet-material releasing function.

In an embodiment of the invention, the roll clearance adjusting device comprises an eccentric flange mounted rotatably in a housing of the sheet material feeding apparatus and including a cylindrical-shaped, outer peripheral surface centered on an eccentric axis off-centered relative to an axis of the main roll and a cylindrical-shaped, inner peripheral surface in the coaxial relationship with the axis of the main roll, the both axial ends of the main roll are mounted rotatably in the housing with the eccentric flange therebetween, and the main roll is displaced up and down by rotating the eccentric flange relative to the housing about the eccentric axis.

In a further embodiment of the invention, an eccentric-flange driving device for rotational driving of the eccentric flange is provided on the eccentric flange.

For example, the eccentric-flange driving device includes an eccentric-flange drive motor mounted to one axial end of the eccentric flange, a swinging arm mounted to a motor shaft of the eccentric-flange drive motor and provided in a recess on a wall portion of the eccentric flange, and a roller follower provided protrusively at a tip end of the swinging arm to be able to roll and to engage with a guide groove provided on a wall portion of a housing of the sheet material feeding apparatus, and when the motor shaft of the eccentric-flange drive motor is rotationally driven to swing the swinging arm, the eccentric flange is rotated through the roller follower and the guide groove.

Brief Description of the Drawings

Fig. 1 is an axial, cross sectional view showing a sheet material feeding apparatus according to Embodiment 1 of the invention;
Fig. 2 is a cross sectional view as viewed in an arrow direction II-II in Fig. 1;
Figs. 3A and 3B are cross sectional views illustrating the operation of a release device of the sheet material feeding apparatus according to Embodiment 1;
Fig. 4 is a view illustrating a control device that controls the release device;
Fig. 5 is a view illustrating an eccentric flange provided on the sheet material feeding apparatus;
Figs. 6A, 6B, and 6C are views illustrating meritorious effects produced by the use of a rectilinear cam;
Figs. 7A, 7B, 7C, 7D, 7E, 7F, and 7G are schematic views illustrating the relationship between the feeding action of the sheet material feeding apparatus and the action of a press apparatus;
Fig. 8 is a cross sectional view showing Embodiment 2 of the invention;
Fig. 9 is a cross sectional view showing Embodiment 3 of the invention;
Fig. 10 is a cross sectional view showing Embodiment 4 of the invention;
Fig. 11 is a right side view of Fig. 10;
Figs. 12A and 12B are views illustrating a state, in which an eccentric flange is rotated in Embodiment 4;
Fig. 13 is a cross sectional view showing Embodiment 5 of the invention;
Fig. 14 is a right side view of Fig. 13;
Figs. 15A, 15B, and 15C are views illustrating the operation of a roll clearance adjusting device in Embodiment 5; and
Figs. 16A and 16B are cross sectional views showing Embodiment 6 of the invention.

Description of the Preferred Embodiments

(Fundamental operation of sheet material feeding apparatus)

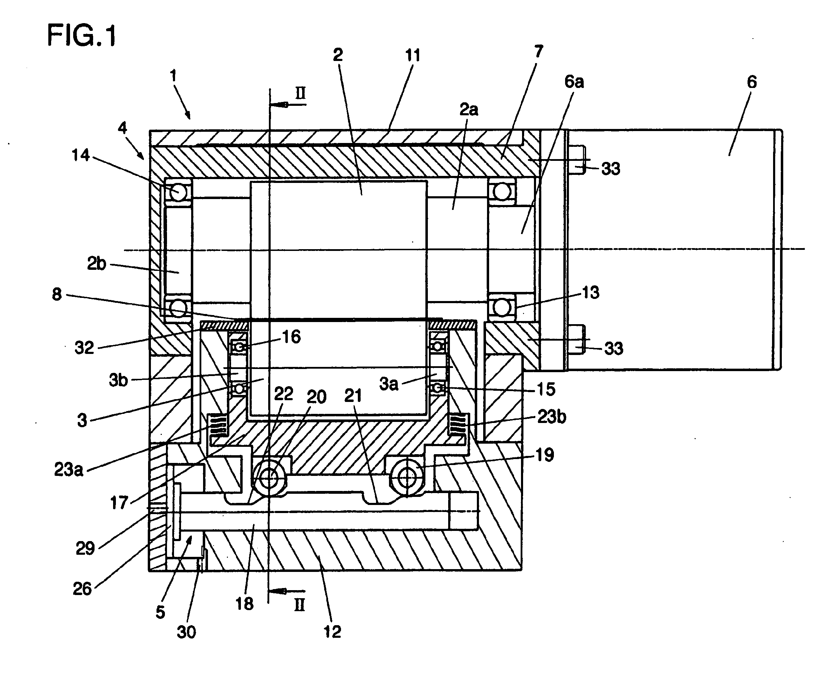

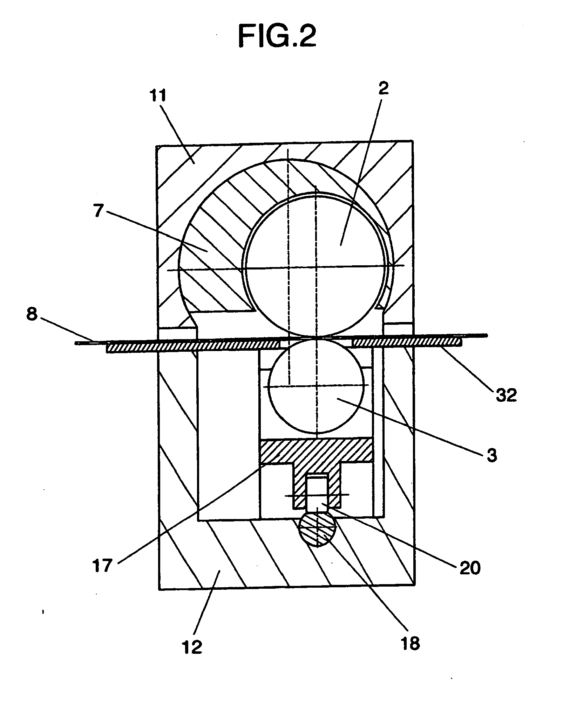

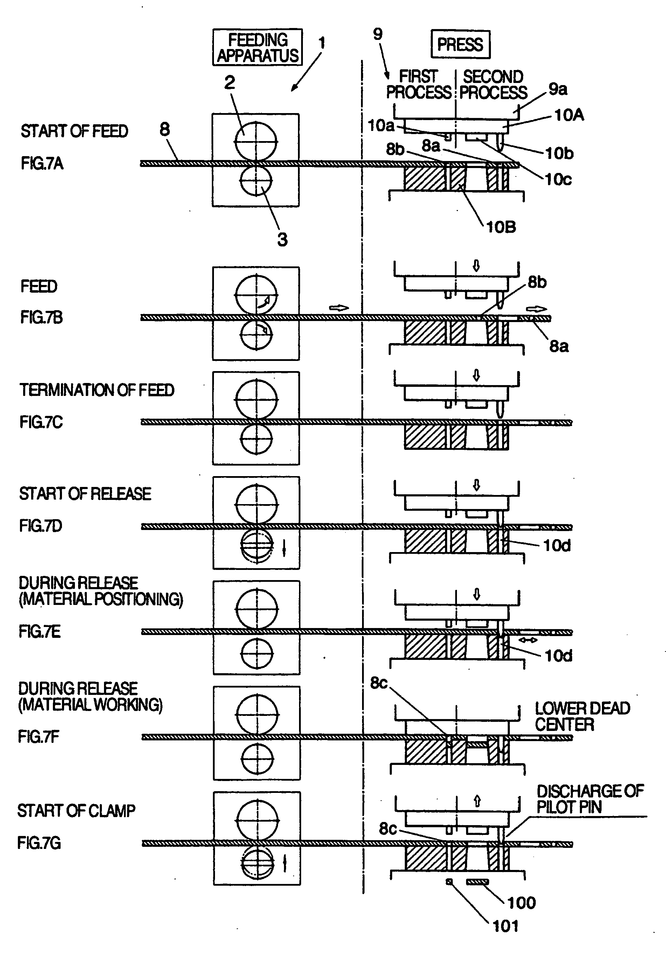

A sheet material feeding apparatus 1, according to Embodiment 1, shown in Figs. 1 and 2 comprises a pair of upper and lower rolls, that is, a main roll 2 and a sub-roll 3, by which a sheet material 8 is interposed, and the material is fed to a press apparatus in an intermittent feeding action. While the specific construction of respective parts of the apparatus will be described later, the fundamental operation of the sheet material feeding apparatus 1 will be first described with reference to Fig. 7.

Fig. 7A shows a state; in which a punching punch 10a forms a positioning hole 8a in the sheet material 8 fed to the press apparatus 9 by the sheet material feeding apparatus 1 (first process), then the sheet material 8 is further fed by the sheet material feeding apparatus 1, press working, that is, punching working by a blanking punch 10c (second process) and formation of a positioning hole 8b by the punching punch 10a are completed, and a slider 9a of the press apparatus 9 rises.

In a state shown in Fig. 7A, the sheet material feeding apparatus 1 is stationary having the sheet material 8 interposed by the main roll 2 and the sub-roll 3. From this state, the main roll 2 is rotationally driven a predetermined angle as shown in Fig. 7B whereby the sub-roll 3 is rotated through the sheet material 8 to feed the sheet material 8 rightward in the figure. In this manner, the sheet material 8 interposed by the both rolls is fed to the press apparatus 9. Subsequently, as shown in Fig. 7C, the both rolls become stationary, at which time the slider 9a with an upper metal mold 10A mounted to an underside thereof begins to descend toward a lower metal mold 10B.

Thereafter, as shown in Fig. 7D, the sub-roll 3 is displaced downward and the both rolls release the sheet material 8, in which state the slider 9a of the press apparatus 9 descends further as shown in Figs. 7D and 7E and a pilot pin 10b provided on the upper metal mold 10A passes through the hole 8b of the sheet material 8 to be inserted into a receiving hole 10d of the lower metal mold 10B. In this manner, the sheet material 8 is positioned highly accurately between the upper metal mold 10A and the lower metal mold 10B.

Subsequently, as shown in Fig. 7F, the slider 9a descends further, the blanking punch 10c of the upper metal mold 10A punches the sheet material 8, and the punching punch 10a forms a positioning hole 8c on the sheet material. Thereafter, as shown in Fig. 7G, the slider 9a ascends and the sub-roll 3 is displaced upward to bring about a state, in which the both rolls interpose the sheet material 8.

By repeating a series of operations (A) to (G), the sheet material feeding apparatus 1 intermittently feeds the sheet material 8 to the press apparatus 9 (the upper metal mold 10A and the lower metal mold 10B) and the press apparatus 9 performs press working on the sheet material as fed.

In addition, the reference numeral 100 in Fig. 7G denotes a product subjected to press working and 101 denotes punched scrap when the hole 8c is formed.

As apparent from the above descriptions, the both rolls release the sheet material temporarily in states shown in Figs. 7D, 7E, and 7F, during which the sheet material is positioned in the press apparatus 9 by inserting the pilot pin 10b into the hole 8b beforehand formed on the sheet material.

(Main roll and sub-roll)

As shown in Fig. 1, the main roll 2 is rotationally driven intermittently by a drive motor 6 such as servomotor or the like and the sub-roll 3 is rotated through the sheet material 8 by the main roll 2. The drive motor 6 is fixed to one end of an eccentric flange 7, described late in detail, by bolts 33 and can be rotated together with the eccentric flange 7 when the eccentric flange 7 is rotated. As shown in Figs. 1 and 2, a housing of the sheet material feeding apparatus 1 includes a first housing portion 11 accommodating therein the main roll 2 and the eccentric flange 7 and a second housing portion 12 accommodating therein the sub-roll 3 and a sub-roll guide 17 described late in detail. The first housing portion 11 and the second housing portion 12 are assembled integrally. One end 2a of the main roll 2 is connected to a motor shaft 6a of the drive motor 6, the moor shaft 6a being mounted rotatably in the eccentric flange 7 with a bearing member 13 therebetween. The other end 2b of the main roll 2 is mounted rotatably in the eccentric flange 7 with a bearing member 14 therebetween. Both ends 3a, 3b of the sub-roll 3, respectively, are supported rotatably on the sub-roll guide 17 with bearing members 15, 16 therebetween. In addition, the reference numeral 32 in Figs. 1 and 2 denotes a sheet material guide.

(Construction and operation of release device)

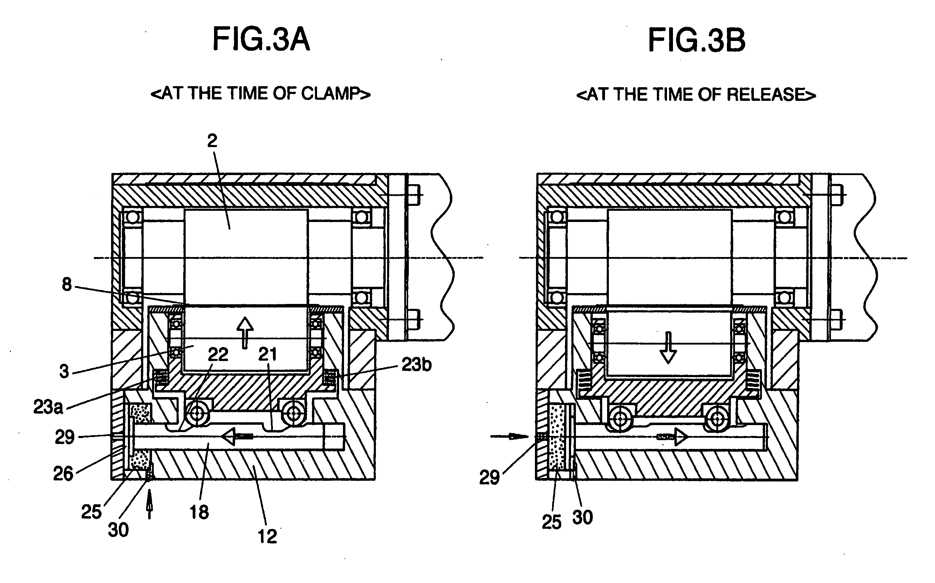

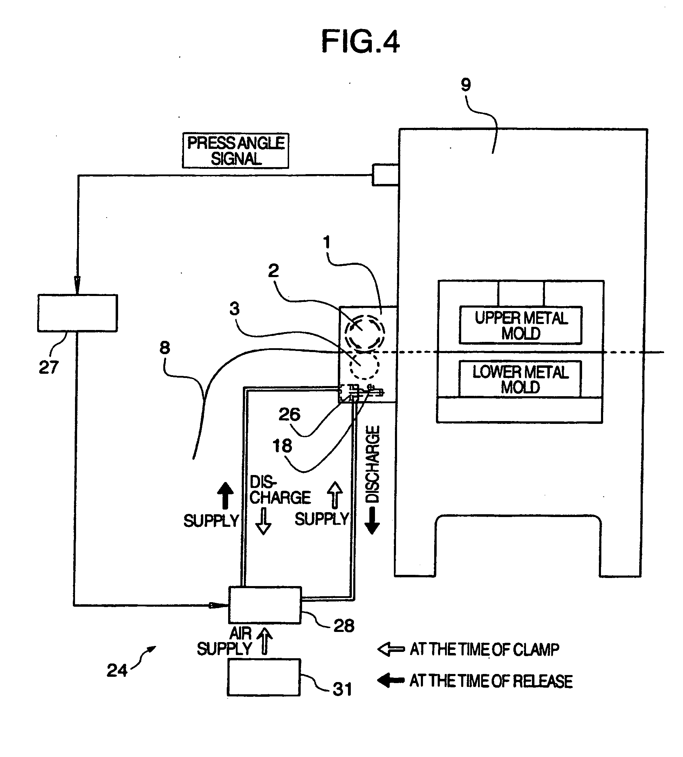

A release device 5 comprises the sub-roll guide 17 rotatably supporting the both ends 3a, 3b of the sub-roll 3 with the bearing members 15, 16 therebetween, a rectilinear cam 18 movable axially of the sub-roll 3, and a control device 24 shown clearly in, especially, Figs. 3 and 4.

The sub-roll guide 17 is accommodated in the second housing portion 12 to be able to move up and down together with the sub-roll 3 and biased downward by elastic members 23a, 23b. Cam followers 19, 20 are mounted to a lower end of the sub-roll guide 17 to be able to roll, the cam followers 19, 20 engaging with cam surfaces 21, 22 of the rectilinear cam 18. In Embodiment 1, the cam surfaces 21, 22 are formed in two locations spaced a predetermined distance in a longitudinal direction of the rectilinear cam 18 and the cam followers 19, 20 engage one by one with the cam surfaces 21, 22.

As shown in Figs. 3 and 4, the control device 24 includes a cylinder 25 provided in the second housing portion 12 and a piston 26 accommodated in the cylinder 25 to be able to reciprocate and connected to the rectilinear cam 18. Also, formed on the second housing portion 12 are a first port 29 communicated to a portion of the cylinder 25 positioned on one side of the piston 26 and a second port 30 communicated to a portion of the cylinder 25 positioned on the other side of the piston 26.

As shown in Fig. 4, the control device 24 responds to a press angle signal from the press apparatus 9 to cause a controller 27 to switch a solenoid 28, thus controlling supplying of an air to the cylinder 25 from an air source 31.

That is, when the sheet material is interposed and clamped by the both rolls, the control device 24 supplies an air to the cylinder 25 through the second port 30 as shown in Fig. 3A to move the rectilinear cam 18 leftward together with the piston 26 and to discharge an air from the cylinder 25 through the first port 29 according to movements thereof. Movements of the rectilinear cam 18 engage the cam followers 19, 20 with upwardly raised portions of the cam surfaces 21, 22 of the rectilinear cam 18. Accordingly, the sub-roll guide 17 and the sub-roll are displaced upward against the elastic forces of the elastic members 23a, 23b with the cam followers 19, 20 therebetween and so the sheet material 8 is interposed between the both rolls.

When the sheet material is to be released, the control device 24 supplies an air to the cylinder 25 through the first port 29 as shown in Fig. 3B to move the sheet material 8 rightward together with the piston 26 and to to discharge an air from the cylinder 25 through the second port 30 according to movements thereof. Movements of the rectilinear cam 18 engage the cam followers 19, 20 with downwardly dented portions of the cam surfaces 21, 22 of the rectilinear cam 18. Accordingly, the sub-roll guide 17 and the sub-roll are displaced downward while being pushed downward by the elastic members 23a, 23b with the cam followers 19, 20 therebetween and the sheet material 8 having been interposed between the both rolls is released thereby.

(Construction and operation of roll clearance adjusting device)

A roll clearance adjusting device 4 is constructed so that the main roll 2 is displaced up and down to adjust a clearance between the both rolls.

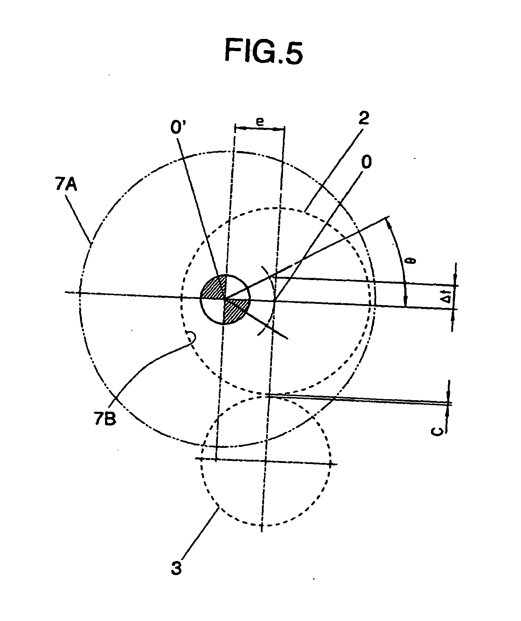

As shown in Figs. 1 and 5, the roll clearance adjusting device 4 comprises the eccentric flange 7 mounted rotatably in the first housing portion 11 to surround the main roll 2. The both ends 2a, 2b of the main roll 2 are mounted in the first housing portion 11 with the bearing members 13, 14 and the eccentric flange 7 therebetween. The eccentric flange 7 includes a cylindrical-shaped, outer peripheral surface 7A centered on an eccentric axis O' off-centered relative to an axis O of the main roll 2 by a distance indicated by e in Fig. 5 and a cylindrical-shaped, inner peripheral surface 7B in the coaxial relationship with the axis O of the main roll 2.

Accordingly, when the eccentric flange 7 is rotated an angle θ relative to the first housing portion 11 about an eccentric axis O', the main roll 2 is displaced up and down by a magnitude indicated by Δt whereby it is possible to adjust a clearance C between the both rolls according to the thickness of the sheet material. The relationship among the vertical displacement Δt of the main roll 2, the distance e of eccentricity of the axis O' relative to the axis O, and a rotating angle θ of the eccentric flange 7 is as follows.

$$\Delta t = e \cdot SIN\ \theta$$

It suffices that the eccentric flange 7 in Embodiment 1 be rotated an appropriate angle relative to the first housing portion 11 by suitable means to adjust a clearance C between the both rolls and be fixed in a position rotated by the suitable means after the adjustment.

In Embodiment 1, an upper roll comprises the main roll 2 driven by the drive motor and a lower roll comprises the sub-roll 3 but it is of course possible that a lower roll be made a main roll driven by a drive motor and an upper roll be made a sub-roll.

(Effect of Embodiment 1)

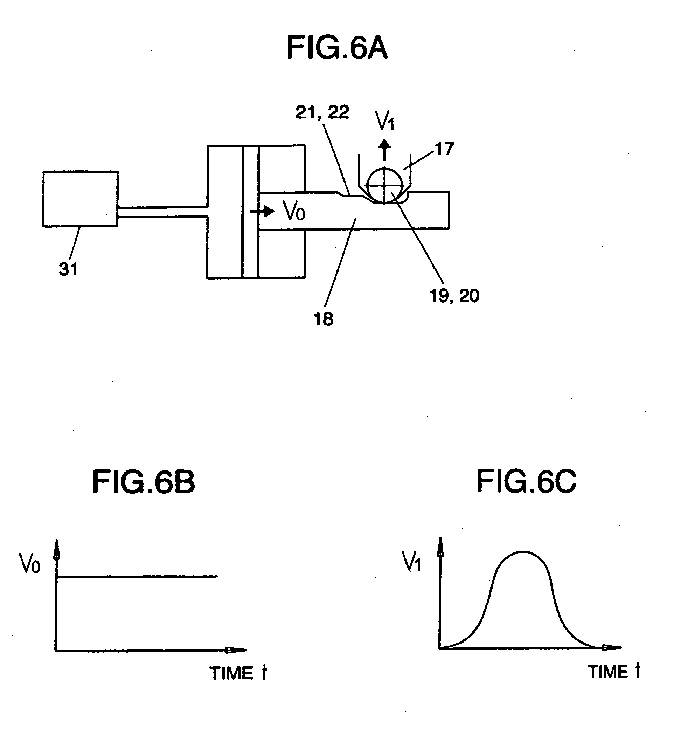

As shown in Fig. 6A, according to Embodiment 1, horizontal movement of the rectilinear cam 18 is converted into vertical displacement of the sub-roll 3 through the medium of the cam followers 19, 20 and the sub-roll guide 17. Here, where $V_0$ denotes a traveling speed of the rectilinear cam 18 in a horizontal direction and $V_1$ denotes a traveling speed of the cam followers 19, 20 in a vertical direction, the traveling speed $V_0$ of the rectilinear cam 18 is always constant over a period of time from the start of movement to the stoppage of movement and the relationship between the traveling speed $V_0$ and time t is as shown in Fig. 6B. Accordingly, when vertical displacement of the sub-roll 3 is made at a speed in proportion to the traveling speed of the rectilinear cam 18, a great impact is caused at the start (vertical displacement of the sub-roll begins) and at the stoppage (vertical displacement of the sub-roll stops). According to Embodiment 1, since vertical displacements of the cam followers 19, 20 are made through the cam surfaces 21, 22 of the rectilinear cam 18, however, an appropriate design of shapes of the cam surfaces 21, 22 makes it possible to configure the relationship between the traveling speed $V_1$ of the cam followers 19, 20, that is, the sub-roll and time t in a manner shown in Fig. 6C, thus enabling smoothing operations at the start and at the stoppage to eliminate generation of impulse and vibrations in operation.

Also, the roll clearance adjusting device 4 displaces the main roll 2 vertically to generate the roll clearance adjusting function while the release device 5 displaces the sub-roll 3 vertically to generate the sheet-material releasing function. In this manner, since the release device is configured to generate only the sheet-material releasing function irrespective or independently of the roll clearance adjusting function, it becomes very easy to design the shape of the cam surfaces of the rectilinear cam so as to preferably generate the sheet-material releasing function, or the like. Also, it is possible to appropriately set conditions to design the roll clearance adjusting device 4 independently of the release device.

Further, the sheet-material releasing function can be very readily generated only by using the control device 24 (Fig. 4) to control supply and discharge of an air to the cylinder 25.

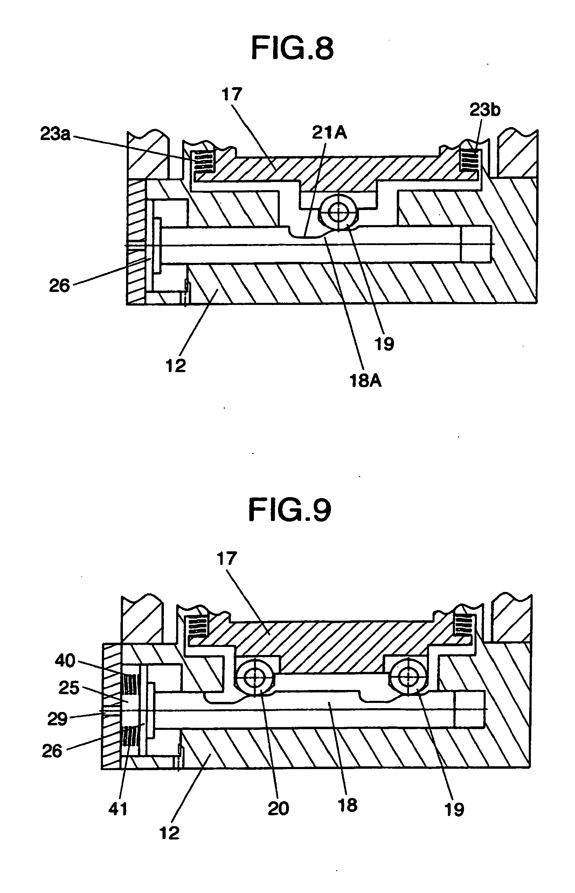

Embodiments 2 to 6 of the invention will be described below. In addition, the same elements and members as those in Embodiment 1 are denoted by the same reference numerals in Figs. 8 to 16, in which Embodiments 2 to 6 are shown. A detailed explanation of the same parts as those in Embodiment 1 is omitted in the following descriptions.

(Embodiment 2)

Embodiment 2 shown in Fig. 8 comprises a single cam surface 21A formed on a rectilinear cam 18A and a single cam follower 19 engages with the cam surface 21A. With such construction, it is possible to maintain a sub-roll in a not-completely horizontal state. Accordingly, even in the case where, for example, a sheet material is delicately different in thickness between one end and the other end of a sheet width, sheet feeding in a state, in which the sub-roll is inclined, is made possible according to the difference.

(Embodiment 3)

According to Embodiment 3 shown in Fig. 9, elastic members 40, 41 are provided in a cylinder 25. The elastic members 40, 41 are put in a compressed state when a rectilinear cam 18 is in a position shown in Fig. 9, that is, a sub-roll is displaced upward through the medium of cam followers 19, 20 and a sub-roll guide 17 to interpose a sheet material between a main roll and the sub-roll. Accordingly, at the time of sheet-material release, at which time the rectilinear cam 18 moves rightward from a position shown in Fig. 9 to displace the sub-roll downward, movement of the rectilinear cam 18 and hence downward displacement of the sub-roll can be made further quickly since elastic forces of the elastic members 40, 41 in addition to air pressure introduced into a cylinder 25 through a first port 29 promote movements of the rectilinear cam 18.

(Embodiment 4)

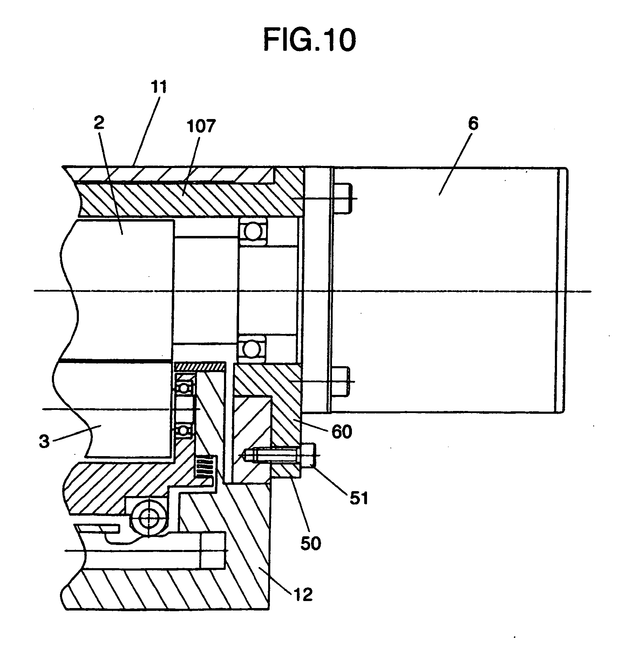

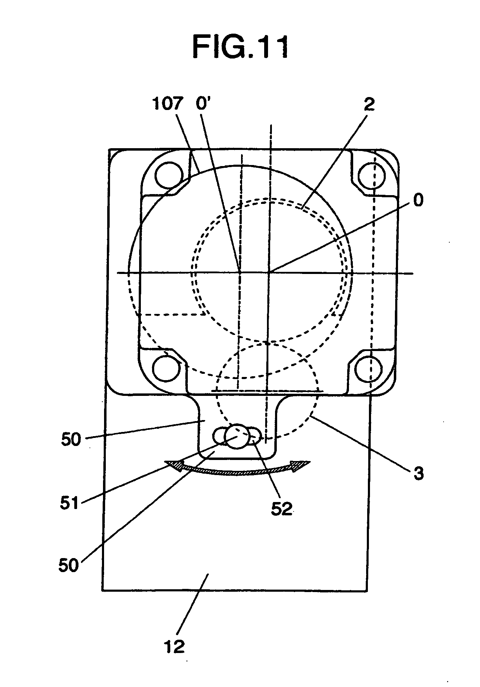

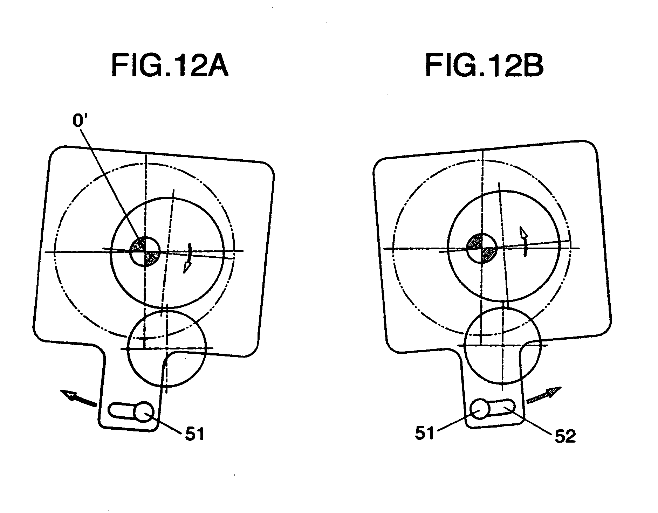

According to Embodiment 4 shown in Figs. 10 and 11, an operating part, that is, a projection 50 for rotational operation of an eccentric flange 107 is provided on an end member 60 at one axial end of an eccentric flange 107. Formed on the projection 50 is an arcuate groove 52 centered on an eccentric axis O of the eccentric flange 107. In adjusting a roll clearance, the projection 50 is manually or mechanically grasped and the eccentric flange 107 is rotated. That is, it suffices to rotate the eccentric flange 107 by an appropriate magnitude in a direction, in which a roll clearance is decreased as shown in Fig. 12A, or in a direction, in which a roll clearance is increased as shown in Fig. 12B, and to fix the projection 50 to a housing by means of a bolt 51.

(Embodiment 5)

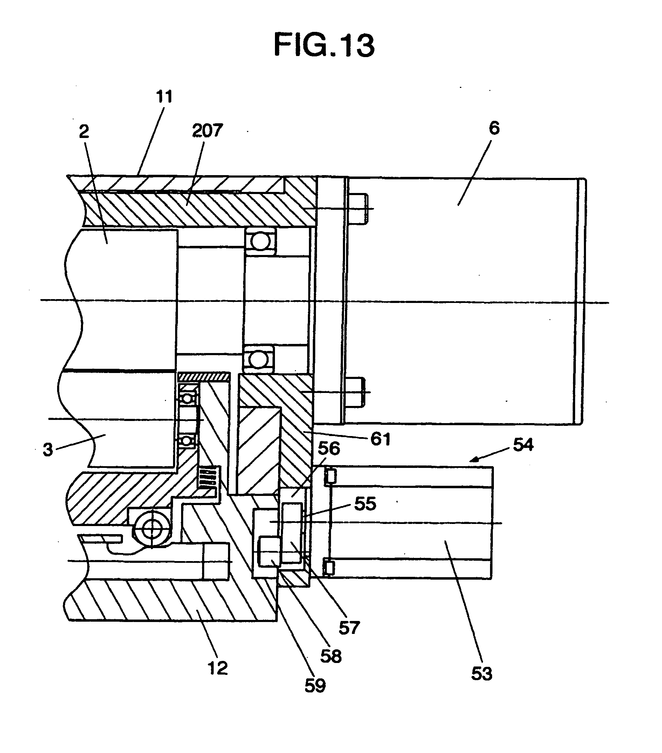

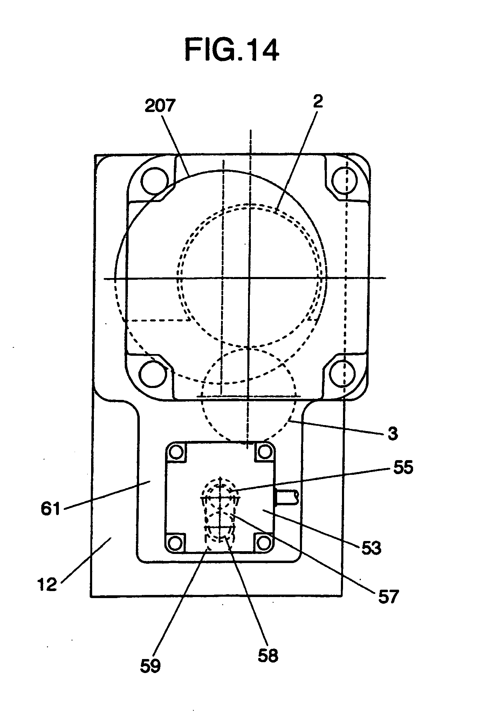

According to Embodiment 5 shown in Figs. 13 and 14, there is provided an eccentric-flange driving device 54 for rotational driving of an eccentric flange 207. The eccentric-flange driving device 54 includes an eccentric-flange drive motor 53 mounted on an end member 61 at one axial end of the eccentric flange 207 and a swinging arm 57 mounted to a motor shaft 55 of the eccentric-flange drive motor 53 and provided in a recess 56 on a wall portion of the end member 61 of the eccentric flange 207. A roller follower 58 is protrusively provided at a tip end of the swinging arm 57 to be able to roll, the roller follower 58 engaging with a guide groove 59 provided on a wall portion of a housing of a sheet material feeding apparatus, that is, a second housing portion 12 in the embodiment shown in the figure.

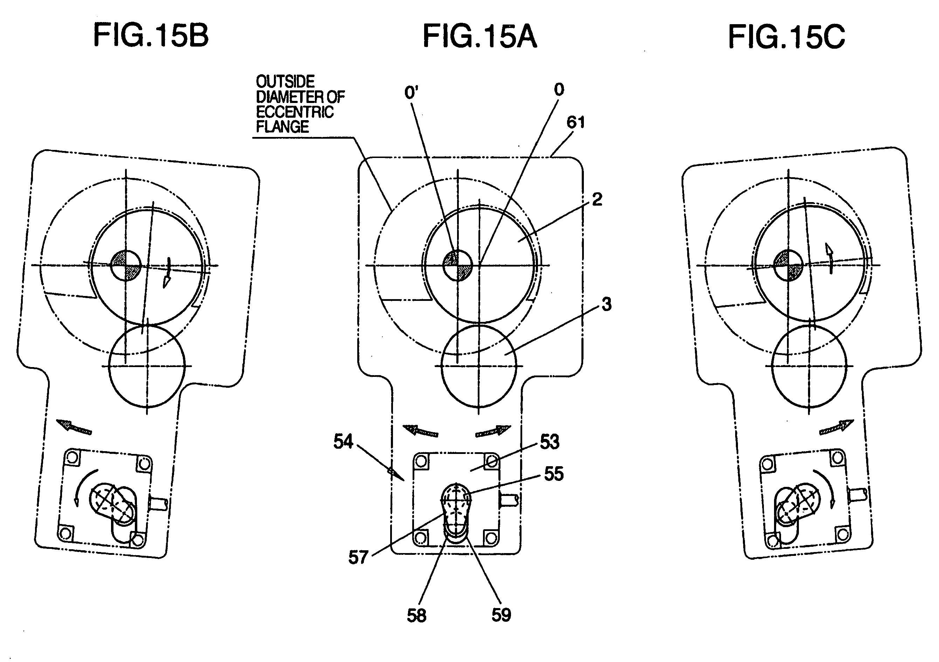

According to Embodiment 5, when the motor shaft 55 of the eccentric-flange drive motor 53 is rotationally driven from a state shown in Fig. 15A to swing the swinging arm 57, the roller follower 58 moves up and down in the guide groove 59 while rolling and the swinging arm 57 correspondingly swings together with the motor shaft 55 to rotate the eccentric flange 207 in a direction, in which a roll clearance is decreased as shown in Fig. 15B, or in a direction, in which a roll clearance is increased as shown in Fig. 15C.

(Embodiment 6)

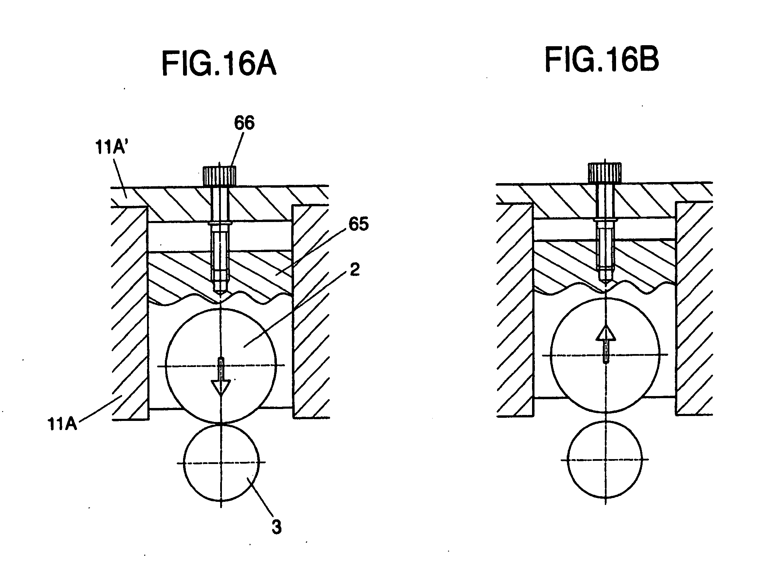

According to Embodiment 6 shown in Fig. 16, a roll clearance is adjusted without the use of any eccentric flange. That is, according to Embodiment 6, a main roll 2 is held by a holding member 65 provided vertically slidably on a housing 11A and an adjustment bolt 66 extending through a top wall 11A' of the housing to be threaded into the holding member 65 is rotated whereby the main roll 2 together with the holding member 65 is displaced downward as shown in Fig. 16A, or displaced upward as shown in Fig. 16B to adjust a roll clearance according to the thickness of a sheet material.

## Claims

1. A sheet material feeding apparatus comprising a pair of upper and lower rolls (2, 3) that interpose therebetween a sheet material (8) to intermittently feed the same to a press apparatus (9), a roll clearance adjusting device (4) that is adapted to adjust a clearance between the both rolls according to the thickness of the sheet material, and a release device (5) that is adapted to temporarily release the sheet material having been interposed by the both rolls just before the sheet material fed to the press apparatus is subjected to press working, the pair of rolls including a main roll (2) driven by a drive motor (6) and a sub-roll (3) driven through the sheet material by the main roll,
   the roll clearance adjusting device (4) being adapted to displace the main roll (2) up and down to adjust a clearance between the both rolls; and
   the release device (5) including a sub-roll guide (17) that rotatably supports the sub-roll and can move up and down together with the sub-roll, **characterized in that**: the release device (5) further includes a rectilinear cam (18; 18A) that is movable axially of the sub-roll, a cam follower (19, 20) mounted to the sub-roll guide to engage with a cam surface of the rectilinear cam, and a control device (24) that is adapted to move the rectilinear cam in synchronism with the operation of the press apparatus to displace the sub-roll up and down through the cam follower and the sub-roll guide.

2. The sheet material feeding apparatus according to claim 1, **characterized in that** the control device (24) includes a cylinder (25), a piston (26) accommodated in the cylinder to be able to reciprocate and connected to the rectilinear cam (18; 18A), and means that controls supply and discharge of an air from the cylinder.

3. The sheet material feeding apparatus according to claim 1 or 2, **characterized in that** the roll clearance adjusting device (4) comprises an eccentric flange (7; 107; 207) mounted rotatably in a housing of the sheet material feeding apparatus (1) and including a cylindrical-shaped, outer peripheral surface centered on an eccentric axis off-centered relative to an axis of the main roll (2) and a cylindrical-shaped, inner peripheral surface in the coaxial relationship with the axis of the main roll, the both axial ends of the main roll are mounted rotatably in the housing with the eccentric flange therebetween, and the main roll is displaced up and down by rotating the eccentric flange relative to the housing about the eccentric axis.

4. The sheet material feeding apparatus according to claim 3, **characterized in that** the drive motor (6) is fixed to one axial end of the eccentric flange to be able to rotate together with the eccentric flange, and a motor shaft (6a) of the drive motor is connected to one end of the main roll.

5. The sheet material feeding apparatus according to claim 3 or 4, **characterized in that** the eccentric flange (107) includes an operating part (50) for rotational operation of the eccentric flange.

6. The sheet material feeding apparatus according to claim 3, 4 or 5, **characterized in that** an eccentric-flange driving device (54) for rotational driving of the eccentric flange (207) is provided on the eccentric flange.

7. The sheet material feeding apparatus according to claim 6, **characterized in that** the eccentric-flange driving device (54) includes an eccentric-flange drive motor (53) mounted to one axial end of the eccentric flange (207), a swinging arm (57) mounted to a motor shaft (55) of the eccentric-flange drive motor and provided in a recess (56) on a wall portion (61) of the eccentric flange, and a roller follower (58) provided protrusively at a tip end of the swinging arm to engage with a guide groove (59) provided on a wall portion of a housing of the sheet material feeding apparatus, and when the motor shaft of the eccentric-flange drive motor is rotationally driven to swing the swinging arm, the eccentric flange is rotated through the roller follower and the guide groove.

## Patentansprüche

1. Schichtmaterialbeförderungsvorrichtung umfassend:

   ein Paar von oberen und unteren Rollen (2, 3), welche dazwischen ein Schichtmaterial (8) anordnen, um dasselbe intermittierend zu einer Pressvorrichtung (9) zu befördern, eine Rollenabstandeinstellvorrichtung (4), welche ausgestaltet ist, einen Abstand zwischen den beiden Rollen gemäß der Dicke des Schichtmaterials einzustellen, und eine Freigabevorrichtung (5), welche ausgestaltet ist, das Schichtmaterial, welches zwischen den beiden Rollen angeordnet wurde, zeitweise freizugeben gerade bevor das zu der Pressvorrichtung geführte Schichtmaterial einer Pressbearbeitung ausgesetzt wird, wobei das Paar von Rollen einer Hauptrolle (2), welche von einem Antriebsmotor (6) angetrieben wird, und eine Unterrolle (3), welche durch das Schichtmaterial von der Hauptrolle angetrieben wird, aufweist,

   wobei die Rollenabstandeinstellvorrichtung (4) ausgestaltet ist, die Hauptrolle (2) nach oben und unten zu versetzen, um einen Abstand zwischen den beiden Rollen einzustellen; und

wobei die Freigabevorrichtung (5) eine Unterrollenführung (17) aufweist, welche die Unterrolle drehbar hält und sich zusammen mit der Unterrolle nach oben und unten bewegen kann,

**dadurch gekennzeichnet, dass** die Freigabevorrichtung (5) ferner einen geradlinigen Nocken (18; 18A), welcher axial zu der Unterrolle beweglich ist, einen Nockenmitnehmer (19, 20), welcher an der Unterrollenführung angebracht ist, um in eine Nockenfläche des geradlinigen Nockens einzugreifen, und eine Steuervorrichtung (24), welche ausgestaltet ist, den geradlinigen Nocken synchron zu dem Betrieb der Pressvorrichtung zu bewegen, um die Unterrolle durch den Nockenmitnehmer und die Unterrollenführung nach oben und unten zu versetzen, aufweist.

2. Schichtmaterialbeförderungsvorrichtung nach Anspruch 1, **dadurch gekennzeichnet, dass** die Steuervorrichtung (24) einen Zylinder (25), einen Kolben (26), welcher in dem Zylinder untergebracht ist, um in der Lage zu sein, sich hin und herzubewegen, und welcher mit dem geradlinigen Nocken (18; 18A) verbunden ist, und ein Mittel, welches ein Zuführen und Ablassen von Luft aus dem Zylinder steuert, aufweist.

3. Schichtmaterialbeförderungsvorrichtung nach Anspruch 1 oder 2, **dadurch gekennzeichnet, dass** die Rollenabstandeinstellvorrichtung (4) einen exzentrischen Flansch (7; 107; 207) umfasst, welcher drehbar in einem Gehäuse der Schichtmaterialbeförderungsvorrichtung (1) angebracht ist und eine zylindrisch geformte Außenumfangsfläche, welche auf einer exzentrischen Achse nicht-zentrisch bezogen auf eine Achse der Hauptrolle (2) zentriert ist, und eine zylindrisch geformte Innenumfangsfläche in der koaxialen Beziehung zu der Achse der Hauptrolle aufweist, wobei beide axialen Enden der Hauptrolle drehbar in dem Gehäuse mit dem exzentrischen Flansch dazwischen angebracht sind, und wobei die Hauptrolle durch Drehen des exzentrischen Flansches bezogen auf das Gehäuse um die exzentrische Achse nach oben und unten versetzt wird.

4. Schichtmaterialbeförderungsvorrichtung nach Anspruch 3, **dadurch gekennzeichnet, dass** der Antriebsmotor (6) an einem axialen Ende des exzentrischen Flansches befestigt ist, um in der Lage zu sein, sich zusammen mit dem exzentrischen Flansch zu drehen, und dass eine Motorwelle (6a) des Antriebsmotors mit einem Ende der Hauptrolle verbunden ist.

5. Schichtmaterialbeförderungsvorrichtung nach Anspruch 3 oder 4, **dadurch gekennzeichnet, dass** der exzentrische Flansch (107) ein Betriebsteil (50) für einen Drehbetrieb des exzentrischen Flansches aufweist.

6. Schichtmaterialbeförderungsvorrichtung nach Anspruch 3, 4 oder 5, **dadurch gekennzeichnet, dass** eine Antriebsvorrichtung (54) für einen exzentrischen Flansch für einen Drehantrieb des exzentrischen Flansches (207) an dem exzentrischen Flansch vorgesehen ist.

7. Schichtmaterialbeförderungsvorrichtung nach Anspruch 6, **dadurch gekennzeichnet, dass** die Antriebsvorrichtung (54) für den exzentrischen Flansch einen Antriebsmotor (53) für den exzentrischen Flansch, welcher an einem axialen Ende des exzentrischen Flansches (207) angebracht ist, einen Schwingarm (57), welcher an einer Motorwelle (55) des Antriebsmotors für den exzentrischen Flansch angebracht ist und in einer Aussparung (56) an einem Wandabschnitt (61) des exzentrischen Flansches vorgesehen ist, und einen Rollenmitläufer (58), welcher hervorragend an einem Ende des Schwingarms vorgesehen ist, um in eine Führungsnut (59) einzugreifen, welche an einem Wandabschnitt eines Gehäuses der Schichtmaterialbeförderungsvorrichtung vorgesehen ist, aufweist, und dass, wenn die Motorwelle des Antriebsmotors des exzentrischen Flansch drehend angetrieben wird, um den Schwingarm zu schwingen, der exzentrische Flansch durch den Rollenmitnehmer und die Führungsnut gedreht wird.

## Revendications

1. Appareil d'alimentation en matériau en feuille comprenant une paire de rouleaux supérieur et inférieur (2, 3) qui interposent entre ceux-ci un matériau en feuille (8) pour distribuer en intermittence ce dernier à un appareil de presse (9), un dispositif de réglage d'espace libre entre rouleaux (4) qui est adapté pour régler un espace libre entre les deux rouleaux selon l'épaisseur du matériau en feuille, et un dispositif de libération (5) qui est adapté pour libérer temporairement le matériau en feuille ayant été interposé par les deux rouleaux juste avant que le matériau en feuille distribué à l'appareil de presse soit soumis à un usinage à la presse, la paire de rouleaux comprenant un rouleau principal (2) entraîné par un moteur d'entraînement (6) et un rouleau subsidiaire (3) entraîné par l'intermédiaire du matériau en feuille par le rouleau principal,

le dispositif de réglage d'espace libre entre rouleaux (4) étant adapté pour déplacer le rouleau principal (2) vers le haut et vers le bas pour régler un espace libre entre les deux rouleaux ; et

le dispositif de libération (5) comprenant un guidage de rouleau subsidiaire (17) qui supporte le rouleau subsidiaire de façon rotative et peut se déplacer vers le haut et vers le bas conjointement au rouleau subsidiaire, **caractérisé en ce que** le dispositif de libération (5) comprend en outre une came rectilinéaire (18 ; 18A) qui est mobile de façon axiale par rapport au rouleau subsidiaire, un suiveur de came (19, 20) monté sur le guidage de rouleau subsidiaire pour entrer en prise avec une surface de came de la came rectilinéaire, et un dispositif de commande (24) qui est adapté pour déplacer la came rectilinéaire en synchronisme avec le fonctionnement de l'appareil de presse pour déplacer le rouleau subsidiaire vers le haut et vers le bas par l'intermédiaire du suiveur de came et du guidage de rouleau subsidiaire.

2. Appareil d'alimentation en matériau en feuille selon la revendication 1, **caractérisé en ce que** le dispositif de commande (24) comprend un vérin (25), un piston (26) logé dans le vérin pour être capable de se déplacer en va-et-vient et relié à la came rectilinéaire (18 ; 18A), et des moyens qui commandent l'alimentation en air et l'évacuation d'air à partir du vérin.

3. Appareil d'alimentation en matériau en feuille selon la revendication 1 ou 2, **caractérisé en ce que** le dispositif de réglage d'espace libre entre rouleaux (4) comprend une bride excentrique (7 ; 107 ; 207) montée de façon rotative dans un logement de l'appareil d'alimentation en matériau en feuille (1) et comprenant une surface périphérique extérieure de forme cylindrique centrée sur un axe excentrique excentré par rapport à un axe du rouleau principal (2) et une surface périphérique intérieure de forme cylindrique en relation coaxiale avec l'axe du rouleau principal, les deux extrémité axiales du rouleau principal sont montées de façon rotative dans le logement avec la bride excentrique entre celles-ci, et le rouleau principal est déplacé vers le haut et vers le bas en faisant tourner la bride excentrique par rapport au logement autour de l'axe excentrique.

4. Appareil d'alimentation en matériau en feuille selon la revendication 3, **caractérisé en ce que** le moteur d'entraînement (6) est fixé à une extrémité axiale de la bride excentrique pour être capable de tourner conjointement avec la bride excentrique, et qu'un arbre moteur (6a) du moteur d'entraînement est relié à une extrémité du rouleau principal.

5. Appareil d'alimentation en matériau en feuille selon la revendication 3 ou 4, **caractérisé en ce que** la bride excentrique (107) comprend une partie de fonctionnement (50) pour le fonctionnement rotatif de la bride excentrique.

6. Appareil d'alimentation en matériau en feuille selon la revendication 3, 4 ou 5, **caractérisé en ce qu'**un dispositif d'entraînement de bride excentrique (54) pour l'entraînement rotatif de la bride excentrique (207) est prévu sur la bride excentrique.

7. Appareil d'alimentation en matériau en feuille selon la revendication 6, **caractérisé en ce que** le dispositif d'entraînement de bride excentrique (54) comprend un moteur d'entraînement de bride excentrique (53) monté sur une extrémité axiale de la bride excentrique (207), un bras pivotant (57) monté sur un arbre de moteur (55) du moteur d'entraînement de bride excentrique et prévu dans un évidement (56) sur une partie de paroi (61) de la bride excentrique, et un suiveur de rouleau (58) prévu de façon saillante à une extrémité du bras pivotant pour entrer en prise avec une rainure de guidage (59) prévue sur une partie de paroi d'un logement de l'appareil d'alimentation en matériau en feuille, et, lorsque l'arbre de moteur du moteur d'entraînement de bride excentrique est entraîné de façon rotative pour faire pivoter le bras pivotant, la bride excentrique est tournée par l'intermédiaire du suiveur de rouleau et de la rainure de guidage.

FIG.1

# FIG.2

# FIG.3A

<AT THE TIME OF CLAMP>

# FIG.3B

<AT THE TIME OF RELEASE>

EP 2 055 402 B1

# FIG.4

PRESS ANGLE SIGNAL

UPPER METAL MOLD

LOWER METAL MOLD

9

1

2

3

8

27

26

18

DIS-CHARGE

DISCHARGE

SUPPLY

SUPPLY

28

AIR SUPPLY

24

31

⇐ AT THE TIME OF CLAMP

◄ AT THE TIME OF RELEASE

# FIG.5

# FIG.6A

21, 22    V₁    17

V₀

31    18    19, 20

# FIG.6B

V₀

TIME t

# FIG.6C

V₁

TIME t

FEEDING APPARATUS  1

PRESS

9

FIRST PROCESS  SECOND PROCESS

START OF FEED

FIG.7A

FEED

FIG.7B

TERMINATION OF FEED

FIG.7C

START OF RELEASE

FIG.7D

DURING RELEASE (MATERIAL POSITIONING)

FIG.7E

DURING RELEASE (MATERIAL WORKING)

FIG.7F

START OF CLAMP

FIG.7G

LOWER DEAD CENTER

DISCHARGE OF PILOT PIN

# FIG.8

# FIG.9

# FIG.10

# FIG.11

# FIG.12A

# FIG.12B

# FIG.13

# FIG.14

FIG.15C

FIG.15A

FIG.15B

OUTSIDE
DIAMETER OF
ECCENTRIC
FLANGE

FIG.16B

FIG.16A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 05228560 A
- US 5720421 A
- JP 3057414 U